# EUROPÄISCHE PATENTSCHRIFT

(11) **EP 2 683 034 B1**
(45) Veröffentlichungstag und Bekanntmachung des Hinweises auf die Patenterteilung: **06.05.2015**
(21) Anmeldenummer: 12305789.5
(22) Anmeldetag: 02.07.2012
(51) Int. Cl.: H01R 43/00, H01R 4/36, H02G 15/08, H01R 4/30

(54) **Verfahren zum elektrisch leitenden Verbinden der elektrischen Leiter von zwei Hochspannungskabeln**
Method for a connection conducting electricity between the electricity conductors of two electrical units
Procédé de connexion conductrice d'électricité du conducteur électrique de deux câbles de haute tension

(43) Veröffentlichungstag der Anmeldung: 08.01.2014
(73) Patentinhaber: Nexans, 75008 Paris (FR)
(72) Erfinder: Baesch, Manfred, 46049 Oberhausen (DE); Groetsch, Peter, 95111 Rehau (DE); Markgraf, Volker, 95195 Roeslau (DE); Stauch, Gert, Dr., 95032 Hof (DE)
(74) Vertreter: Döring, Roger

(56) Entgegenhaltungen:
- EP-A1- 2 148 392
- EP-A1- 2 226 899
- US-A- 6 050 844
- US-A1- 2004 137 783

## Beschreibung

Die Erfindung bezieht sich auf ein Verfahren zum elektrisch leitenden Verbinden der elektrischen Leiter von zwei Hochspannungskabeln gemäß dem Oberbegriff des Patentanspruchs 1.

Ein solches Verfahren geht beispielsweise aus der EP 2 226 899 A1 hervor.

Millikenleiter werden in der Regel bei Einleiter-Hochspannungskabeln mit großen Leiterquerschnitten eingesetzt, die beispielsweise bei über 1000 mm² liegen. Sie bestehen aus einer Vielzahl von elektrisch leitenden Drähten, die miteinander verseilt und in mindestens drei Sektorleitern zusammengefaßt sind, welche gemeinsam einen kreisrunden Leiter bilden. Ein solcher Millikenleiter mit sechs Sektorleitern geht beispielsweise aus der DE 40 36 169 C2 hervor. Zur Verringerung des Skineffekts einerseits und des Proximityeffekts andererseits sind die Sektorleiter gegeneinander isoliert. Zur weiteren Verringerung der Wirkungen dieser beiden Effekte können auch die einzelnen Drähte des Millikenleiters gegeneinander isoliert sein, beispielsweise durch Auftragen einer Lackschicht auf jeden einzelnen Draht. Zum wirksamen elektrisch leitenden Durchverbinden der Millikenleiter zweier Hochspannungskabel mit herkömmlichen Verbindungselementen müssen alle Isolierschichten der Leiter im Bereich der Verbindungsstelle mit erheblichem Aufwand entfernt werden, damit möglichst alle Drähte der Leiter elektrisch leitend durchverbunden werden können.

In der eingangs erwähnten EP 2 226 899 A1 ist ein Verfahren zum elektrisch leitenden Verbinden von zwei elektrischen Leitern beschrieben, das auch für Millikenleiter verwendet werden kann. Die beiden zu verbindenden Leiter werden in ein mit Feststellschrauben ausgerüstetes Rohrstück aus Metall so eingebracht, daß zwischen den Stirnseiten der beiden Leiter ein Spalt verbleibt. Sie werden in dieser Position mittels der Feststellschrauben im Rohrstück festgelegt. In den Spalt zwischen den beiden Leitern werden mit einer drehbaren, konisch ausgeführten Spitze ausgerüstete Kontaktschrauben eingedreht. Die Spitze ist jeweils in eine Ausnehmung einer Fixierschraube eingeschraubt. Sie hat ein gegenüber dem Gewinde der Fixierschraube gegenläufiges Außengewinde. Aufgrund dieser gegenläufigen Gewinde dringt die Spitze jeder Fixierschraube tief in den Spalt zwischen den Leitern ein.

Der Erfindung liegt die Aufgabe zugrunde, das eingangs geschilderte Verfahren so zu gestalten, daß die beiden Millikenleiter mit vermindertem Aufwand elektrisch wirksam durchverbunden werden können.

Diese Aufgabe wird entsprechend den kennzeichnenden Merkmalen des Patentanspruchs 1 gelöst.

Bei Einsatz dieses Verfahrens brauchen nur die beiden vom Mantel befreiten Leiter der zu verbindenden Kabel in das Rohrstück eingesteckt und in demselben mit aneinander liegenden Stirnseiten festgelegt zu werden. In den Leitern der beiden Kabel vorhandene Isoliermaterialien, wie die gegenseitige Isolierung der Sektorleiter und gegebenenfalls auf den einzelnen Drähten vorhandene Lackschichten, können in denselben verbleiben. Nach Festlegung der beiden Leiter in dem Rohrstück mittels der Feststellschrauben liegen dieselben mit ihren Stirnseiten unverrückbar aneinander. Es werden dann mittels eines durch die zentralen Durchgangslöcher hindurchgeführten Bohrers Bohrungen erzeugt, die radial in das Rohrstück hineinragen und so zwischen den beiden Leitern liegen, daß sie möglichst gleichmäßig in beide Leiter hineinragen. Die abschließend in die zentralen Durchgangslöcher und weiterführend in die Bohrungen einzuschraubenden Kontaktschrauben haben einen gegenüber dem Innendurchmesser der Bohrungen geringfügig größeren Durchmesser, so daß sie mit ihrem Gewinde in die beiden Leiter einschneiden. Die elektrisch leitende Verbindung zwischen den Leitern der beiden Kabel ist dann fertiggestellt. Ein mittels der Kabel zu übertragender Strom fließt gegebenenfalls über die Kontaktschrauben direkt von Leiter zu Leiter. Die Kontaktschrauben bestehen in Abhängigkeit vom Material der Leiter mit Vorteil aus Kupfer oder einer Kupferlegierung bzw. aus einer Aluminiumlegierung.

Das Verfahren nach der Erfindung wird anhand der Zeichnungen als Ausführungsbeispiel erläutert.

Es zeigen:
Fig. 1 schematisch eine Verbindungsstelle zwischen zwei elektrischen Hochspannungskabeln mit Millikenleitern teilweise im Schnitt.
Fig. 2 eine Ansicht der Stirnseite eines der Kabel nach Fig. 1.
Fig. 3 eine gegenüber Fig. 1 ergänzte Verbindungsstelle im Schnitt.
Fig. 4 einen Schnitt durch Fig. 3 entlang der Linie IV - IV.
Fig. 5 und 6 Ergänzungen zur Verbindungsstelle nach Fig. 3.
Fig. 7 einen Schnitt durch eine ergänzte Verbindungsstelle nach Fig. 3.
Fig. 8 einen Schnitt durch Fig. 7 entlang der Linie VIII - VIII.
Fig. 9 eine gegenüber Fig. 7 weiter ergänzte Verbindungsstelle.
Fig. 10 einen Schnitt durch Fig. 9 entlang der Linie X-X.
Fig. 11 einen Schnitt durch eine gegenüber Fig. 9 weiter ergänzte Verbindungsstelle.

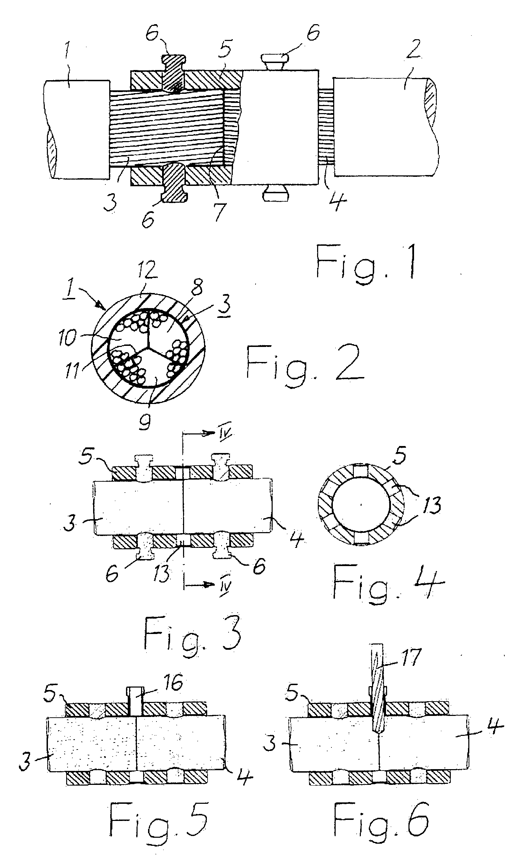

In Fig. 1 ist schematisch eine Verbindungsstelle zwischen zwei Kabeln 1 und 2 beschrieben, deren Leiter 3 und 4 sich in einem Rohrstück 5 aus Metall befinden. Sie sind in dem Rohrstück 5 durch eine Vielzahl von Feststellschrauben 6 in einer Position festgelegt, in welcher ihre Stirnseiten in einer Ebene 7 aneinander liegen, die rechtwinklig zur Achse der Kabel 1 und 2 sowie des Rohrstücks 5 verläuft. Der Übersichtlichkeit halber sind in Fig. 1 nur vier Feststellschrauben 6 eingezeichnet. In praktischer Ausführung sind auf der ganzen Länge des Rohrstücks 5 und über dessen Umfang verteilt Feststellschrauben 6 vorhanden, die mit Vorteil als Abscherschrauben ausgeführt sind. Das Rohrstück 5 besteht beispielsweise aus einer Aluminiumlegierung.

Die beiden Kabel 1 und 2 haben einen als Millikenleiter ausgeführten Leiter. Ein solcher Leiter ist beispielsweise in Fig. 2 gezeigt und als Leiter 3 des Kabels 1 bezeichnet. Der Leiter 4 des Kabels 2 kann identisch ausgeführt sein. Der Einfachheit halber wird im folgenden nur der Aufbau des Leiters 3 erläutert. Er besteht aus einer Vielzahl von miteinander verseilten Drähten aus elektrisch gut leitendem Material, beispielsweise aus Kupfer oder einer Kupferlegierung. Der Leiter 3 ist gemäß Fig. 2 beispielsweise in drei Sektorleiter 8, 9 und 10 aufgeteilt, die sich jeweils über einen Winkel von 120° erstrecken und zusammen den kreisrunden Leiter 3 bilden. Der Leiter 3 kann auch mehr als drei Sektorleiter aufweisen. Es werden in üblicher Technik beispielsweise sechs Sektorleiter eingesetzt. Zwischen den Sektorleitern 8, 9 und 10 ist jeweils eine Schicht 11 aus Isoliermaterial angebracht. Auf die Drähte des Leiters 3 kann außerdem jeweils eine als Lackschicht ausgeführte Isolierung aufgebracht sein. Der Leiter 3 ist von einem Mantel 12 aus Isoliermaterial umgeben. In den drei Sektorleitern 8, 9 und 10 sind in Fig. 2 jeweils nur einige Drähte eingezeichnet.

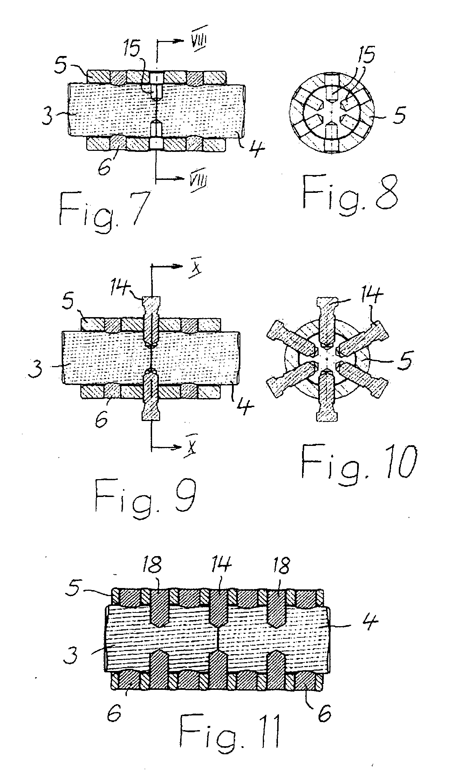

Das Rohrstück 5 hat neben mit einem Gewinde versehenen Durchgangslöchern zur Aufnahme der Feststellschrauben 6 etwa in seiner Mitte in Höhe der Ebene 7 ebenfalls mit einem Gewinde versehene, zentrale Durchgangslöcher 13, von denen in der Ebene 7 mehrere in Umfangsrichtung verteilt im Rohrstück 5 angebracht sind. Sie dienen zur Aufnahme von aus den Fig. 9 und 10 ersichtlichen Kontaktschrauben 14, die ebenfalls mit Vorteil als Abscherschrauben ausgeführt sind. Die Kontaktschrauben 14 dienen der elektrisch leitenden Verbindung der beiden Leiter 3 und 4. Sie bestehen - wie bereits erwähnt - mit Vorteil aus Kupfer oder einer Kupferlegierung bzw. aus einer Aluminiumlegierung.

Das Verfahren nach der Erfindung wird beispielsweise wie folgt durchgeführt:
Zunächst werden die Leiter 3 und 4 an den Enden der Kabel 1 und 2 durch Entfernen der Mäntel 12 freigelegt. Außerdem werden in dem Rohrstück 5, das mit einer Vielzahl von Feststellschrauben 6 bestückt ist bzw. eine entsprechende Anzahl von mit einem Gewinde versehenen Durchgangslöchern hat, die zentralen, ebenfalls mit einem Gewinde versehenen Durchgangslöcher 13 angebracht. Es werden in der Ebene 7 beispielsweise sechs in Umfangsrichtung gegeneinander versetzte zentrale Durchgangslöcher 13 im Rohrstück 5 erzeugt.

Danach werden die Leiter 3 und 4 der beiden Kabel 1 und 2 von zwei entgegengesetzten Seiten in das Rohrstück 5 so weit eingesteckt, bis sie entsprechend Fig. 3 in der Ebene 7 mit ihren Stirnseiten aneinander liegen. In dieser Position werden die Leiter 3 und 4 durch Festziehen der Feststellschrauben 6 im Rohrstück 5 festgelegt. Die Leiter 3 und 4 sind nur auf einer für das Einstecken in das Rohrstück 5 benötigten Länge vom Mantel 12 befreit. Weitere Maßnahmen werden an den Leitern 3 und 4 nicht durchgeführt. Das gilt insbesondere für alle in denselben vorhandenen Isoliermaterialien.

Anschließend werden in der Ebene 7 mit den zentralen Durchgangslöchern 13 fluchtende, radial nach innen weisende und in beide Leiter 3 und 4 eingreifende Bohrungen 15 (Fig. 7) zur Aufnahme der Kontaktschrauben 14 hergestellt. Dazu werden mit Vorteil Bohrhülsen 16 in die zentralen Durchgangslöcher 13 eingeschraubt, durch welche ein Bohrer 17 geführt werden kann. Bei Einsatz der Bohrhülsen 16 ist auf einfache Weise sichergestellt, daß das Gewinde der zentralen Durchgangslöcher 13 beim Erzeugen der Bohrungen 15 nicht beschädigt werden.

Der Bohrer 17 hat wegen der in die zentralen Durchgangslöcher 13 eingeschraubten Bohrhülsen 16 einen kleineren Durchmesser als die zentralen Durchgangslöcher 13, so daß auch die Bohrungen 15 einen kleineren Durchmesser als die zentralen Durchgangslöcher 13 haben. Die Bohrungen 15 sollen auch dann einen kleineren Durchmesser als die Durchgangslöcher 13 haben, wenn beim Bohren derselben keine Bohrhülsen eingesetzt werden.

Bei richtiger Positionierung der Leiter 3 und 4 im Rohrstück 5, bei welcher ihre Stirnseiten in Höhe der zentralen Durchgangslöcher 13 aneinander liegen, ragen die Bohrungen 15 gleichmäßig in Form von zylindrischen Halbschalen in die beiden Leiter 3 und 4 hinein. Die abschließend in die zentralen Durchgangslöcher 13 und weiterführend in die Bohrungen 15 eingeschraubten Kontaktschrauben 14 haben einen dem Durchmesser der zentralen Durchgangslöcher 13 entsprechenden Durchmesser. Sie schneiden dementsprechend bei ihrer Montage mit ihrem Gewinde zusätzlich in die Leiter 3 und 4 ein, wodurch der Kontakt zwischen den Leitern 3 und 4 und den Kontaktschrauben 14 erhöht wird.

Zur weiteren Verbesserung der elektrisch leitenden Verbindung zwischen den beiden Kabeln 1 und 2 können im Rohrstück 5 gemäß Fig. 11 zusätzliche, mit einem Gewinde versehene Durchgangslöcher angebracht werden, durch welche weitere in die Leiter 3 und 4 eingreifende Kontaktschrauben 18 eingeschraubt werden können. Der Strom kann dann auch über die Kontaktschrauben 18 und das Rohrstück 5 fließen.

## Patentansprüche

1. Verfahren zum elektrisch leitenden Verbinden der elektrischen Leiter von zwei Hochspannungskabeln, die jeweils einen von einem Mantel aus Isoliermaterial umgebenen, als Millikenleiter ausgeführten Leiter aufweisen, bei welchem ein Rohrstück (5) aus Metall verwendet wird, das auf seiner ganzen Länge und über seinen Umfang verteilt eine Vielzahl von mit einem Gewinde versehenen Durchgangslöchern zur Aufnahme von Feststellschrauben (6), sowie etwa in seiner Mitte in einer rechtwinklig zu seiner Achse verlaufenden Ebene (7) mehrere in Umfangsrichtung gegeneinander versetzte, mit einem Gewinde versehene zentrale Durchgangslöcher (13) zur Aufnahme von Kontaktschrauben (14) aufweist, wobei
zunächst die Leiter (3,4) der beiden Kabel (1,2) an ihren Enden durch Entfernen des jeweiligen Mantels (12) freigelegt werden, **dadurch gekennzeichnet,**
- **daß** daraufhin die beiden Leiter (3,4) so von unterschiedlichen Seiten in das Rohrstück (5) eingesteckt werden, daß sie in Höhe der zentralen Durchgangslöcher (13) mit ihren rechtwinklig zu ihrer Achse verlaufenden Stirnseiten aneinander liegen,
- **daß** die Leiter (3,4) danach mittels der Feststellschrauben (6) im Rohrstück (5) festgelegt werden,
- **daß** anschließend durch die zentralen Durchgangslöcher (13) hindurch in radialer Richtung verlaufende Bohrungen(15) erzeugt werden, die in beide Leiter (3,4) der beiden Kabel (1,2) im Bereich ihrer Stirnseiten hineinragen und mit einem im Verhältnis zum Durchmesser der zentralen Durchgangslöcher (13) kleineren Durchmesser ausgeführt werden, und
- **daß** abschließend Kontaktschrauben (14) aus elektrisch gut leitendem Metall in die zentralen Durchgangslöcher (13) und weiterführend in die Bohrungen (15) eingeschraubt werden, wobei sie bei ihrer Montage mit ihrem Gewinde in die beiden Leiter (3,4) einschneiden.

2. Verfahren nach Anspruch 1, **dadurch gekennzeichnet, daß** im Verlauf des Rohrstücks (5) zusätzliche, mit einem Gewinde versehene Durchgangslöcher angebracht werden, durch welche weitere in die beiden Leiter (3,4) eingreifende Kontaktschrauben (18) eingeschraubt werden.

## Claims

1. Method for electrically conductively connecting the electrical conductors of two high voltage cables, each of which have a conductor constructed as a Milliken conductor which is surrounded by a sheath of insulating material, in which a pipe piece (5) of metal is used, which pipe piece has a plurality of throughholes over its entire length and distributed over its circumference, each throughhole being provided with a thread for receiving securing screws (6), as well as approximately in the middle of the pipe piece in a plane (7) extending perpendicularly to its axis, several central throughholes (13) each provided with thread and offset relative to each other in a circumferential direction for receiving contact screws (14), wherein initially the conductors (3,4) of the two cables (1,2) are exposed at their ends by removing the respective sheath (12), **characterized in**
- **that** subsequently the two conductors (3,4) are inserted from different sides into the pipe piece (5) in such a way that they abut against each other on the level of the central throughholes with their end faces extending perpendicularly to their axis,
- **that** the conductors (3,4) are then secured by the securing screws (6) within the pipe piece (5),
- **that** bores (15), extending in the radial direction, are subsequently produced through the central throughholes (13) which protrude into both conductors (3,4) of the two cables (1,2) in the area of their end faces and have a diameter which is smaller than the diameter of the central throughholes (13), and
- **that** finally, contact screws (14) of electrically well conductive metal are screwed into the central throughholes (13) and further into the bores, wherein during their assembly, the contact screws cut with their threads into the two conductors (1,2).

2. Method according to claim 1, **characterized in that** along the pipe piece (5) additional throughholes having a thread are provided, through which additional contact screws (18) are screwed which penetrate into the two conductors (3,4).

## Revendications

1. Procédé pour la connexion électriquement conductrice des conducteurs électriques de deux câbles haute tension qui présentent à chaque fois un conducteur réalisé sous forme de conducteur de type Milliken entouré par une gaine en matériau isolant, dans lequel une pièce tubulaire (5) en métal est utilisée, laquelle présente, répartie sur toute sa longueur et sur sa périphérie, une pluralité de trous traversants pourvus d'un filetage, pour recevoir des vis de fixation (6), ainsi qu'approximativement en son milieu, dans un plan (7) s'étendant perpendiculairement à son axe, plusieurs trous traversants centraux (13) pourvus d'un filetage, décalés les uns par rapport aux autres dans la direction périphérique, pour recevoir des vis de contact (14), les conducteurs (3, 4) des deux câbles (1,2) étant d'abord dénudés à leurs extrémités en enlevant la gaine respective (12), **caractérisé en ce**
- **que** les deux conducteurs (3, 4) sont ensuite enfichés depuis des côtés différents dans la pièce tubulaire (5) de telle sorte qu'ils s'appliquent l'un contre l'autre à la hauteur des trous traversants centraux (13) avec leurs côtés frontaux s'étendant perpendiculairement à leur axe,
- **que** les conducteurs (3, 4) sont ensuite fixés au moyen des vis de fixation (6) dans la pièce tubulaire (5),
- **que** des alésages (15) s'étendant dans la direction radiale à travers les trous traversants centraux (13) sont ensuite produits, lesquels pénètrent dans les deux conducteurs (3, 4) des deux câbles (1, 2) dans la région de leurs côtés frontaux et sont réalisés avec un diamètre inférieur par rapport au diamètre des trous traversants centraux (13), et
- **que** des vis de contact (14) en métal bon conducteur électrique sont ensuite vissées dans les trous traversants centraux (13) et ensuite dans les alésages (15), ces vis, lors de leur montage, mordant avec leur filetage dans les deux conducteurs (3, 4).

2. Procédé selon la revendication 1, **caractérisé en ce que** des trous traversants supplémentaires pourvus d'un filetage sont pratiqués dans l'étendue de la pièce tubulaire (5), à travers lesquels des vis de contact supplémentaires (18) s'engageant dans les deux conducteurs (3, 4) sont vissées.
